# EUROPÄISCHE PATENTSCHRIFT

(11) **EP 3 496 656 B1**
(45) Veröffentlichungstag und Bekanntmachung des Hinweises auf die Patenterteilung: **10.06.2020**
(21) Anmeldenummer: 17749452.3
(22) Anmeldetag: 08.08.2017
(51) Int. Cl.: A61C 13/00, A61C 13/01, A61C 13/08, A61C 13/10, A61C 13/087

(54) **VERFAHREN ZUR ERZEUGUNG EINER PROTHESE ODER TEILPROTHESE**
METHOD FOR PRODUCING A PROSTHESIS OR PARTIAL PROSTHESIS
PROCÉDÉ POUR LA PRODUCTION D'UNE PROTHÈSE OU D'UNE PROTHÈSE PARTIELLE

(30) Priorität: 10.08.2016 DE 102016114825; 02.08.2017 DE 102017117491
(43) Veröffentlichungstag der Anmeldung: 19.06.2019
(73) Patentinhaber: Ivoclar Vivadent AG, 9494 Schaan (LI)
(72) Erfinder: FAUST, Alexander, 9442 Berneck (CH); MUHMENTHALER, Philipp, 4102 Binningen (CH)
(74) Vertreter: Baronetzky, Klaus
(86) Internationale Anmeldenummer: PCT/EP2017/070002
(87) Internationale Veröffentlichungsnummer: WO 2018/029164

(56) Entgegenhaltungen:
- WO-A1-2011/066895
- WO-A1-2016/005287
- DE-A1-102014 102 344
- JP-A- 2015 136 520

## Beschreibung

Die Erfindung betrifft ein Verfahren zur Erzeugung einer Prothese oder Teilprothese, gemäß dem Oberbegriff von Anspruche 1

Die Herstellung von Prothesen ist heutzutage vergleichsweise teuer und aufwendig, auch wenn auf Computerunterstützung zurückgegriffen wird.

Häufig wird folgendes Verfahren angewendet:
Für die Erfassung des Mundraums des Patienten wird entweder ein Abdruck genommen oder ein intraoraler Scan erstellt. Dieser erfasst beispielsweise den mit der Prothese zu bestückenden, unbezahnten Kiefer und beispielsweise den bezahnten Kiefer einschließlich der Patientenzähne.

Basierend auf der Mundsituation wird nun per CAD eine Sollform der Prothese bereitgestellt, einschließlich der Prothesenzähne, die natürlich zu den je zugehörigen Antagonisten passen müssen.

Besonders günstig ist es, wenn hierbei auch gnatologische Gesichtspunkte einbezogen werden, also beispielsweise die Kaubewegung und die zugehörige Kondylengelenkausgestaltung.

Dies kann durch Bereitstellung eines entsprechenden Modelles und dessen Einsatz in einem Artikulator geprüft und gegebenenfalls korrigiert werden.

Die eigentliche Herstellung der Prothese erfolgt dann so, dass basierend auf den gewonnenen Daten eine fleischfarbene Prothesenbasis beispielsweise aus PMMA mit Zahn-kavitäten erzeugt wird. In die Zahnkavitäten werden die zu verwendenden Zähne eingesetzt und eingeklebt. Diese können maschinell gefertigte Zähne eines Zahnsatzes sein. Okklusale Fehlstellen müssen dann per Fräsen oder typischerweise per Schleifen beseitigt werden.

Alternativ kann auch auf individuell zu fertigende Zähne zurückgegriffen werden, beispielsweise solche aus Keramik. Hierbei wird ein vorgefertigter Rohling aus Lithium-metasilikat auf die gewünschte Form gebracht, beispielsweise per Fräsen. Der so erzeugte Zahn wird dann zu Lithiumdisilikat gesintert, wobei ausgenutzt wird, dass hierbei praktisch keine Schrumpfung stattfindet.

Alternativ können auch Kunststoffzähne verwendet werden, die entweder additiv oder subtraktiv gefertigt werden, also beispielsweise durch Fräsen hergestellt werden.

Sämtlichen verwendeten Verfahren ist gemein, dass für eine hochwertige Prothese ohne okklusale Fehlstellen ein vergleichsweise aufwändiger Herstellprozess erforderlich ist, der zudem vergleichsweise lange dauert.

Beispielhaft sei hier auf die Lösung gemäß der DE 10 2009 026 159 A1 verwiesen, gemäß welcher Fräser mit unterschiedlichem Durchmesser für ein Grobfräsen und ein Feinfräsen eingesetzt werden. Es soll gemäß der Lehre dieser Druckschrift eine grob-feingrob-Bearbeitung vorgenommen werden, und auch ein Vorschlichten. Dieses Verfahren ist ebenfalls aufwändig und zeitintensiv.

Ferner sei hier auf die Lösung gemäß der WO 2011/066895 A1 verwiesen, gemäß welcher ein digitaler Abdruck einer Dentalprothese erstellt wird. Gemäß der Druckschrift wird ein vorläufiges Modell aus plastisch verformbaren Material angefertigt, um anschließend weitere Anpassungen vornehmen zu können, bevor die Prothese als Kunstoff- oder Keramik-Zahnbogen erstellt wird.

Demgegenüber liegt der Erfindung die Aufgabe zu Grunde, ein Verfahren gemäß dem Oberbegriff von Anspruch 1 zu schaffen, mit welchem eine Prothese oder Teilprothese rasch und mit hoher Qualität hergestellt werden kann, wobei insbesondere auch die vom Bediener zu erbringende manuelle Arbeit reduziert werden soll.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, dass die Prothesenbasis in einem ersten Schritt rasch schruppgefräst wird. Basierend auf einer Rohlingsscheibe von beispielsweise 98,5 mm bis 100 mm Durchmesser wird so die grobe Form der Prothesenbasis innerhalb von 10 min bis 40 min, insbesondere etwa 30 min, in eine Form gebracht, die der anzustrebenden späteren Prothesenbasis bereits nahekommt, aber an keiner Stelle weniger Material belässt, als es für die spätere Prothesenbasis erforderlich ist.

Hieran anschließend erfolgt ein Schlichtfräsen, und zwar nur an den Stellen, an denen die Prothesenbasis später Kontakt mit den Zähnen oder dem Prothesenzahnbogen gemäß Anspruch 2 hat. Diese Bereiche sind als Kavitäten oder eine U-förmige Ausnehmung ausgebildet. Die grundsätzliche Form der Kavitäten lässt sich bei Bedarf per Schruppfräsen bereits vorbereiten.

Das Schlichtfräsen erfolgt auf eine Zielhöhe entsprechend der per CAD vorgegebenen Trennfuge zwischen Zahnbogen und Prothesenbasis. Dabei wird in an sich bekannten Weise der Stärke der Klebefuge Rechnung getragen.

Nachdem zum einen insofern vorgearbeitet wurde und zum anderen nur kleine Bereiche der Prothesenbasis, insbesondere die Kavitätenbereiche, die beispielsweise lediglich zwischen 5 % und 30 % der Gesamtoberfläche der Prothesenbasis betreffen, lässt sich rasch das entsprechende Schlichtfräsergebnis erzielen.

Wenn zur Beschleunigung des Verfahrens vorgesehen ist die grobe Prothesenbasisgeometrie zu schruppfräsen, umfasst der bearbeitete Bereich um die 30% -55%. der Gesamtoberfläche.

Besonders günstig ist es, wenn ein großer Unterschied der zwischen den für das Schlichtfräsen und für das Schruppfräsen verwendeten Fräswerkzeugen besteht. Die Zustelltiefe des erfindungsgemäß bevorzugten Schruppfräsers kann zwischen beispielsweise. 0,7 mm und 2,5 mm betragen.

Demgegenüber kann die Zustelltiefe eines Schlichtfräsers, wie er erfindungsgemäß verwendet werden soll, zwischen 0,1 mm und 0,5 mm betragen,

Gerade wenn - wie es erfindungsgemäß bevorzugt ist - Kunststoffe wie PMMA, der zahnfleischfarben gehalten ist, gefräst wird, wird erfindungsgemäß darauf geachtet, dass die Fräsarbeitstemperatur gering ist. Beispielsweise lässt sich für das Schruppfräsen mit einem bevorzugt einschneidigen Fräser mit einem Durchmesser von 0,8 bis 5 mm mit 20000 U/min bis 25000 U/min arbeiten, während beim Schlichtfräsen mit einem Fräser mit einem Durchmesser von 0,5 mm bis 2,5 mm mit einer Geschwindigkeit zwischen 25000 U/min und 30000 U/min gearbeitet werden kann. Fissuren, z.B. in der Okklusalfläche von Molaren, können mit feinen Schlichtfräsern mit 0,5 bis 0,7 mm Durchmesser erzeugt werden.

Eine besonders gravierende Kosten- und Zeitreduktion bei der Herstellung einer Prothese oder Teilprothese lässt sich durch Realisierung eines Prothesenzahnbogens aus einem zahnfarbenen Rohling erfindungsgemäß bereitstellen. Der Rohling kann beispielsweise ebenfalls in Scheibenform ausgebildet sein, wobei sich zwei oder sogar mehrere Zahnbögen auf einer Rohlingsscheibe von 100 mm Durchmesser unterbringen lassen. Alternativ kann er auch aus einem im wesentlichen U-förmigen Rohling gefräst werden. Der Rohling wird zunächst per Schruppfräsen - zweckmäßig mit dem gleichen Schruppfräser wie oben erwähnt - bearbeitet, und in die wesentliche U-Form gebracht.

Ein im wesentlichen U-förmiger Zahnbogen kann zur späteren Bereitstellung von Zähnen aus einem zahnfarbenen Material, insbesondere PMMA mit Füllstoffen, aus einem Rohling hergestellt werden. Die Herstellung kann in beliebiger geeigneter Weise erfolgen , z.B. durch Fräsen ode rmittels eines Pressverfahrens.

Anstelle dessen kann das Zahnbogen-Halbprodukt auch durch Spritzgießen oder Formpressen oder ein beliebiges anderes Formgebungsverfahren hergestellt werden. Es ist auch möglich, das den Zahnbogen gleichsam als Viertelprodukt mit Zusatz-Aufmass per Spritzgißen vorzufertigen, und das Halbprodukt dann durch Vorfräsen mit Nenn-Aufmass in der gewünschten Größe entsprechend dem Patienten-Zahnbogen, also z.B. "klein", "mittel" und "groß" fertig schruppzufräsen.

Die Halbprodukterstellung erfolgt bevorzugt unter Belassung von Haltestegen und unter Realisierung eines Aufmasses gegenüber den Zähnen der Prothese, insbesondere per Schruppfräsen. Der Basalbereich des Zahnbogens, also die Basalfläche und die sich hieranschließenden Flächen, werden für die Aufnahme in einer Prothesenbasis vorbereitet. Hierzu wird der Basalbereich in einen im wesentlichen trapezförmigen Querschnitt gebracht.

Der Zahnbogenrohling (zahnfarbener Rohling) kann einen gingival-inzisal bzw. gigival-ocklusal verlaufenden Farbgradienten aufweisen, insbesondere von dunkel nach hell. Bevorzugt wird die Höhenlage des Zahnbogens in dem Rohling per CAD/CAM festgelegt, und zwar nach Wahl des Benutzers, so dass dadurch der tatsächliche Farbbereich und/oder Helligkeitsbereich des Zahnbogens festgelegt wird,

Der Zahnbogen und/oder der Zahnbogenrohling kann auch mehrteilig, z.B. dreiteilig sein, mit 2 molaren und einem Frontzahn-Teilzahnbogen.

In diesem Fall reicht es aus, wenn lediglich der Frontzahnbogen einen Gradienten aufweist.

Die Zahnform wird jedoch noch nicht bereitgestellt. Es wird lediglich die Basalfläche der Zähne des Rohlings per Schrupp- und Schlichtfräsen in die erwünschte Form gebracht, und gegebenenfalls hieran angrenzende Bereiche des Zahnbogens bzw. der Zähne. Diese Bereiche sind bevorzugt als Schrägflächen ausgebildet, die sich in einem Winkel von 100 ° bis 170 ° zur Basalfläche erstrecken und zur Basalfläche hin konvergieren.

Die Winkelausgestaltung, der Verlauf und die sonstige geometrische Ausgestaltung dieses gingivalen Bereichs des Zahnbogens ist exakt an die Zahnkavität der Prothesenbasis angepasst, unter Belassung eines Klebespalts, der beispielsweise 0,150 mm betragen kann, oder aber einen geeigneten Wert zwischen 0,08 mm und 0,22 mm.

Auch hier ist lediglich ein geringer Bereich der gesamten Außenfläche des Zahnbogens, beispielsweise 30 % bis 50 % dem Schlichtfräsen unterworfen, so dass die zu verwendende CNC-Fräsmaschine keine lange Zeit benötigt, um die erwünschten präzisen Kontaktflächen zu erzeugen. Dies umso mehr, da per Schruppfräsen auch hier vorgefräst wurde.

Nachdem der Zahnbogen und die Zahnkavität der Prothesenbasis erzeugt sind, werden die einander zugewandten Flächen - entweder eine dieser oder beide - mit einem geeigneten Klebstoff versehen. Davor findet noch eine Vergrösserung der Oberfläche statt, bspw. mittels Sandstrahlen oder indem bestimmte Strukturen wie Rillen, Erhebungen, Vertiefungen und/oder geometrische Muster an der Basalseite des Zahnbogens oder der Zahnkavitäten der Prothesenbasis eingefräst werden.

Der Klebstoffauftrag kann auch geschehen, während die Prothesenbasis in der CN-C-Fräsmaschine eingespannt ist, indem die Tür zum Fräsraum geöffnet wird und der Bediener die entsprechende Bearbeitung vornimmt.

Alternativ kann natürlich die Prothesenbasis oder der Zahnbogen entnommen und dort entsprechend behandelt werden.

Nachdem beide Teile vorbereitet sind, werden sie jedenfalls an den Bereichen, die später aneinander haften sollen, mit Klebstoff versehen. Hierzu ist per CAD-Design eine Klebefuge von z.B. 0,12 mm vorgesehen. Beispielsweise über eine Transfermatrix werden dann die Teile bis zum Aushärten des Klebstoffs fixiert.

Während für das Aushärten des Klebstoffs auch spezielle Spannhalter eingesetzt werden können, über die die Kombination aus Zahnbogen und Prothesenbasis während des Aushärtens des Klebstoffs eingespannt gehalten wird, ist es auch möglich, die Prothesenbasis erneut in die Fräsmaschine einzuspannen oder in dieser eingespannt zu belassen und nach Einsetzen des Zahnbogens kurzerhand mit diesem gegen eine Gegendruckfläche zu drücken, so dass während des Aushärtens ebenfalls ein Anpressdruck ausgeübt wird.

Durch das Andrücken quillt Klebstoff aus der Klebefuge, und zwar am Übergangsbereich zwischen freiliegenden Bereichen und Kontaktbereichen des Zahnbogens, dem sogenannten Gingivasaum. Der Übergangsbereich zwischen dem Zahnbogen und der Prothesenbasis ist frei von einem Aufmaß. Der Gingivasaum liegt insofern also frei, ist jedoch von Klebstoffüberschuss bedeckt.

Der Klebstoffspalt ist vollständig mit Klebstoff gefüllt. Der Klebstoff quillt seiitlich aus dem Spalt heraus und bildet dort einen Überschuss an Klebstoff oder Fügemasse. Dieser wird beim finalen Schlichtfrässchritt mit entfernt.

Anschließend an das Aushärten wird die Prothesenbasis samt den eingesetzten Zähnen oder - bevorzugt - dem eingesetzten Zahnbogen, in den Werkstückhalter der Fräsmaschine erneut eingespannt oder verbleibt dort eingespannt.

Bevorzugt ist die Fräsmaschine so ausgestaltet, dass ein automatischer Werkzeugwechsel der unterschiedlichen Schrupp- und Schlichtfräser möglich ist.

Zu diesem Zeitpunkt ist die Prothesenbasis bevorzugt noch mit Haltestegen mit dem Rest der Rohlingsscheibe verbunden. Alternativ ist es auch möglich, die Prothesenbasis selbst über entsprechend ausgebildete Werkstückhalter eingespannt zu halten.

Es erfolgt dann ein - fakultativer - Schruppfrässchritt, mit einem gegebenenfalls etwas feineren Schruppfräswerkzeug mit Zustelltiefen zwischen 0,7 mm und 2,5 mm Mit diesem wird das Schlichten vorbereitet, so dass sich die Zeit für das Schlichten weiter verkürzt

Etwaige Klebewülste, die durch herausquellenden Klebstoff entstanden sind, werden im finalen Frässchritt automatisch mitbeseitigt.

In diesem letzten Schritt, der gegebenenfalls auch ohne den vorstehend genannten Schruppfrässchritt erfolgen kann, wird nun sowohl der Zahnbereich als auch der Prothesenbasisbereich auf die erwünschte Zielform schlichtgefräst. Dies kann auch gerne über Nacht erfolgen, wenn dies vom Prozessablauf sinnvoll ist, nachdem während dieses letzten Schrittes kein Benutzereingriff erforderlich ist.

Wenn durch den Klebeschritt Ungenauigkeiten, z.B. hinsichtlich der Höhenlage, entstanden sind, werden diese automatisch mittels des finalen Frässchritts mitkorrigiert. Dies kann gleichsam automatisch miterfolgen: In der CAM-Software ist basierend auf den CA-D-Daten eine Zielform für die Okklusalfläche und die weiteren frei liegenden Zahnflächen hinterlegt.

Wenn nun der Zahnbogen oder Zahnteilbogen "schief" eingeklebt wird, insofern also ein Klebefehler vorliegt, erfolgt dennoch das Schlichtfräsen entsprechend der Zielvorgabe, so dass okklusale Fehlstellen per se vermieden werden.

Hieraufhin wird die Prothese poliert, z.B. für 10 min.

Damit steht die fertige Prothese zur Verfügung und kann der CNC-Fräsmaschine entnommen werden.

Bevorzugt ist das verwendete Material sowohl für den Zahnbogen als auch für die Prothesenbasis an die Erfordernisse angepasst. So kann für den Zahnbogen ein etwas härter eingestelltes PMMA-Kunststoffmaterial oder ein Material aus einer Kombination von PMMA und anorganischen oder organischen Füllstoffe verwendet werden, dessen Festigkeit/Härte größer als die des Prothesenbasismaterials ist. Der Füllstoffanteil des Zahnbogenmatreials beträgt 10 bis 30 Gew.%, bevorzugt etwa 20%.

Während bevorzugt für das Schruppfräsen Fräswerkzeuge mit einem größeren Durchmesser als Schruppfräser und mit einem kleineren Durchmesser als Schlichtfräser eingesetzt werden, ist dies nicht unmittelbar erforderlich; es ist auch möglich, dass im Einzelfall der Durchmesser eines Schlichtfräsers den eines Schruppfräsers übersteigen kann.

Beim Klebeprozess ist es auch möglich, die Prothesenbasis und den Zahnbogen separat zu halten und zwar in einem gewissen vorgegebenen Abstand, der der gewünschten optimalen Dicke der Klebefuge entspricht. Hierbei lässt sich dann auch eine Art Feintuning bereitstellen, indem nämlich die Höhenlage des Zahnbogens relativ zur Prothesenbasis und gegebenenfalls auch die Seitenlage und die Winkellage an die Erfordernisse angepasst wird. Die Klebefuge stellt bei dieser Ausführungsform der Erfindung insofern ein Mittel dar, etwaige okklusale Fehlstellen zu vermeiden oder zu reduzieren. Hierdurch entfällt auch die Notwendigkeit, die Passung z.B. im Artikulator zu überprüfen.

Es versteht sich, dass beim Einsetzen und Wiedereinsetzen des Werkstücks, also des Zahnbogens bzw. der Prothesenbasis, und zwar unabhängig von dem jeweiligen Bearbeitungszustand als Rohling oder als Halbfertigprodukt, Markierungen in an sich bekannter Weise verwendet werden können, die die Zuordnung der exakten Position des Werkstücks zur Einspannvorrichtung der Fräsmaschine sicherstellen.

Derartige Markierungen sind bevorzugt an Stellen angebracht, die nicht weggefräst werden oder gegebenenfalls erst im letzten Schlichtfrässchritt weggefräst werden.

Bevorzugt erfolgt das Schruppfräsen ausgesprochen grob, also nur in die Nähe der Zielform, wobei das Aufmaß schwanken kann, sowohl innerhalb der Prothesenbasis bzw. des Zahnbogens als auch von Exemplar zu Exemplar. Die Schwankungsbreite kann durchaus zwischen 0,2 mm und 1,5 mm betragen.

Durch die Verwendung von größeren Schruppfräsern und durch die Verwendung eines signifikanten Vorschubs, etwas unterhalb der Materialbelastungsgrenze liegt, ist die Schruppfräszeit drastisch geringer, beispielsweise ein Drittel der Schlichtfräszeit.

Der Arbeitsablauf im Dentallabor oder in der Zahnärztepraxis wird durch die kurze Schruppfräszeit, nach der eine Interaktion mit der Bedienperson nötig ist, deutlich verbessert, was einen signifikanten Vorteil der Erfindung darstellt.

In an sich bekannter Weise kann die CAM-Software sowohl das Schruppfräsen als auch das Schlichtfräsen steuern. Es ist auch möglich, mit einer entsprechend ausgerüsteten Fräsmaschine mit Temperatursensor die Materialtemperatur zu überwachen, um die Belastungsgrenze des Materials einzuhalten. In ebenfalls an sich bekannter Weise erfolgt der Werkzeugwechsel ebenso wie der Werkstückwechsel automatisch, so dass lediglich das Kleben als mindestens teilweise den Benutzereingriff erfordernde Tätigkeit verbleibt.

Besonders günstig ist es, wenn sowohl die Prothesenbasis als auch der Zahnbogen zunächst über Haltestege mit dem Rest des Rohlings verbunden bleiben. Hierdurch ist es möglich, einen Spezialhalter für die Halbfertigteile zu vermeiden. Erst zum letztmöglichen Zeitpunkt werden dann die Haltestege entfernt, also beispielsweise für den Zahnbogen beim Einkleben in die Zahnkavität der Prothesenbasis.

Hingegen können die Haltestege für die Prothesenbasis auch erst nach dem abschließenden Schlichtfrässchritt entfernt werden.

Die Form des der miteinander verbundenen Kavitäten für den Zahnbogen lässt sich in weiten Bereichen an die Erfordernisse anpassen. So kann der Kanal oder die Zahnkavität, wie sie auch bezeichnet werden kann, im molaren Bereich flacher und im Frontzahnbereich tiefer ausgebildet sein. Damit kann eine entsprechende Änderung des Winkels der Schrägflächen verbunden sein, so dass im Frontzahnbereich mit steileren Schrägflächen gearbeitet wird als im Molarbereich.

Die Tiefe der Zahnkavität lässt sich ebenfalls in weiten Bereichen an die Erfordernisse anpassen, ebenso wie die Breite. Auch hier kann sich eine Änderung über den Verlauf des Zahnbogens ergeben.

In vorteilhafter Ausgestaltung ist es vorgesehen, dass die aufkumulierte Schruppfräszeit weniger als die Hälfte und besonders bevorzugt weniger als ein Drittel der aufkumulierten Schlichtfräszeit beträgt und dass das Schlichtfräsen insbesondere über Nacht per CAM-Software gesteuert wird.

In weiterer vorteilhafter Ausgestaltung ist es vorgesehen, dass in der gleichen Fräsmaschine Zahnbogen-Rohlinge (10) und Prothesenbasis-Rohlinge in die Werkstückaufnahme eingesetzt werden, insbesondere je in Scheibenform, und dass bei Bedarf je per Werkzeugwechsel von einem Schruppfräser auf einen Schlichtfräser automatisch gewechselt wird.

In weiterer vorteilhafter Ausgestaltung ist es vorgesehen, dass nach Vorbereiten der Basalflächen (20) und der umgebenden Bereiche der Zahnbögen bzw. der Zahnteilbögen per Schlichtfräsen und Vorbereiten der Kavitäten in der Prothesenbasis für die Aufnahme der Zahnbögen oder Zahnteilbögen auf eine oder beide der einander gegenüberliegenden, Flächen Klebstoff aufgetragen wird, insbesondere maschinell, und besonders bevorzugt während mindestens eines der zu verklebenden Teile in der Fräsmaschine eingespannt gehalten ist.

In weiterer vorteilhafter Ausgestaltung ist es vorgesehen, dass nach Klebstoffauftrag die miteinander zu verklebenden Teile in an sich bekannter Weise während der Aushärtung gehalten werden, insbesondere in der Fräsmaschine, wobei der Werkstückhalter der Fräsmaschine die Prothesenbasis und den in diesen eingeklebten Zahnbogen (14) gegen einen Gegendruckbereich drückt und so die Klebehaltekraft aufbringt.

In weiterer vorteilhafter Ausgestaltung ist es vorgesehen, dass mindestens zwei Zahnbögen (14) aus zahnfarbenen Material auf einem Rohling (10) untergebracht sind oder gegebenenfalls eine Mehrzahl von Zahnteilbögen.

In weiterer vorteilhafter Ausgestaltung ist es vorgesehen, dass der Zahnbogenrohling (zahnfarbener Rohling) einen gingival-inzisal bzw. gigival-okklusal verlaufenden Farbgradienten aufweist, insbesondere von dunkel nach hell, und dass insbesondere die per CAD/CAM festgelegte Höhenlage des Zahnbogens in dem Zahnbogenrohling nach Wahl des Benutzers den Farbbereich und/oder Helligkeitsbereich des Zahnbogens festlegt, In weiterer vorteilhafter Ausgestaltung ist es vorgesehen, dass Oberkiefer-Zahnbögen in balligerer Form als Unterkiefer-Zahnbögen vorgefertigt werden, Unterkiefer-Zahnbögen sind demgegenüber schlanker.

Durch das erfindungsgemäße Verfahren ergibt sich eine erhebliche Fräszeitersparnis, und auch eine Verminderung der Werkzeugabnutzung.

Durch vorgeformte Zahnbögen in unterschiedlichen Grössen lässt sich das verbrauchte Material reduzieren. Des Weiteren können Haltestege/Halterungen für CAM-Vorrichtungen an den vorgeformten Zahnbögen vorgesehen sein, die notwendige kostenintensive Diskhalter ersetzen.

Besonders günstig ist es, dass die Fräszeit durch die Frässtrategie, also Schruppfräsen wesentlicher Teile, Schlichtfräsen der Übergangsbereiche, Zusammenfügen, dann ggf. erneut schruppfräsen, dann final Schichtfräsen, erheblich reduziert wird.

Erfindungsgemäß besonders günstig ist es, das der Zahnbogen in der Prothesenbasis wesentlich einfacher verklebt werden kann, verglichen mit dem Einkleben von Einzelzähnen in die Prothesenbasis. Durhc die großflächige Abstützung ist zudem die Klebefestigkeit optimiert.

Weitere Einzelheiten, Vorteile und Merkmale ergeben sich aus der nachfolgenden Beschreibung mehrerer Ausführungsbeispiele anhand der Zeichnungen.

Es zeigen:
- Fig. 1: eine schematische Ansicht eines Zahnbogen-Rohlings mit bereits teilausgefrästem Zahnbogen;
- Fig. 2: ein Rohling für zwei Zahnbögen, die bereits - abgesehen von den Haltestegenschruppgefräst sind;
- Fig. 3: eine Draufsicht auf einen aus der Rohlingsscheibe heraus gelösten Zahnbogen bzw. vorgeformten Zahnbogenrohling, wobei die Haltestege noch vorhanden sind bzw. vorgesehen sind;
- Fig. 4: ein Schnitt durch den Zahnbogen entlang der Linie IV-IV;
- Fig. 5: eine schematische Ansicht eines Prothesenbasis-Halbfabrikats;
- Fig. 6 a und 6b: geschruppte Zahnbögen mit zu schlichtender Basalseite von vorne und von unten ; und
- Fig. 7: eine Ansicht eines beispielhaften Schruppfräsers.

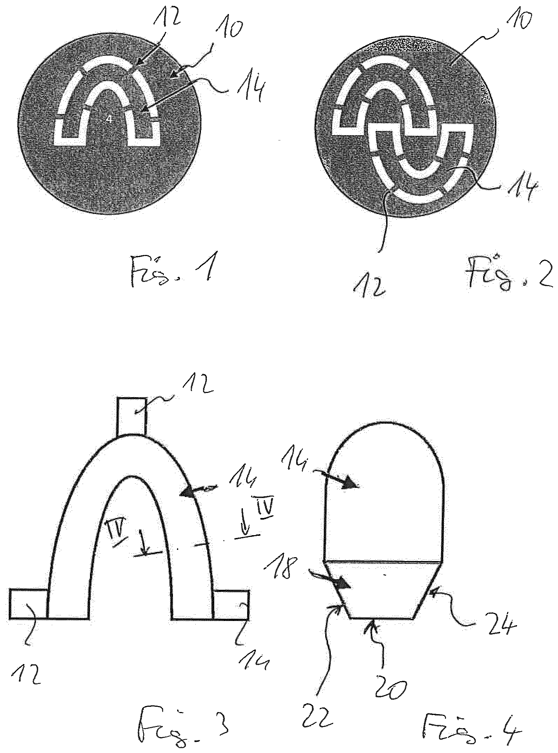

Fig. 1 zeigt eine schematische Darstellung einer Zahnbogen-Rohlingsscheibe 10. Die Zahnbogen-Rohlingsscheibe weist einen Durchmesser von beispielsweise 98,5 mm und eine Höhe von 20 mm auf, wobei es sich versteht, dass diese Bemaßungen in weiten Bereichen an die Erfordernisse anpassbar sind. Die Höhe der Scheibe sollte jedenfalls die maximale Höhe der zu erstellenden Zähne bzw. des zu erstellenden Zahnbogens abdecken, also einschließlich des basalen Bereichs.

Wie aus Fig. 1 ersichtlich ist, ist aus der Scheibe im Wesentlichen ein U herausgefräst, wobei Haltestege 12 das U an dem Rest der Scheibe festhalten.

Das Herausfräsen ist per Schruppfräsen erfolgt, so dass es rasch erledigt werden konnte, beispielsweise innerhalb von 30 min.

Das U wird später als Zahnbogen 14 verwendet und hat eine Größe, die bereits angepasst ist an den Patienten, für den die Prothese später bestimmt ist.

Ein entsprechendes U für eine Unterkiefer-Prothesenbasis wird aus einem anderen, zahnfleischfarbenen Rohling herausgefräst. Diese ist ebenfalls per Schruppfräsen entstanden, und zwar in 15 bis 40 min, insbesondere in 30 min.

Die Prothesenbasis weist ebenfalls Haltestege auf, die sie mit dem Rest der Rohlingsscheibe verbinden.

Das Herausfräsen erfolgt so, dass bereits eine Zahnbogenkavität vorbereitet wird, also per Schruppfräsen vorgefräst wird.

Beide Teile, also die zahnfarbene Zahnbogen-Rohlingsscheibe, aber auch die zahnfleischfarbene Prothesenbasis-Rohlingsscheibe tragen nun je ein Halbfabrikat, das schruppgefräst ist und mit Haltestegen 12 mit dem Rest der Scheibe verbunden ist.

In diesem Zustand werden beide Teile schlichtgefräst, aber lediglich in dem Bereich, in dem Sie für die das Zusammenfügen aneinander bestimmt sind.

Beim Zahnbogen ist der Basalbereich 18 (vgl. Fig. 4), und bei der Prothesenbasis ist dies die Zahnkavität, die hier auch als Zahnbogenkavität bezeichnet werden kann. Das Schlichtfräsen erfolgt, so dass die Basalfläche des Zahnbogens auf das finale Mass gebracht wird. Ferner wird hierbei im dargestellten Ausführungsbeispiel ein Klebespalt von 150 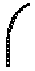 m belassen.

Nach dem Schlichtfräsen wird der Zahnbogen durch Entfernen der Haltestege 12 von der Zahnbogenscheibe getrennt. Er wird im Basalbereich mit Klebstoff versehen, oder aber die Zahnkavität der Prothesenbasis wird mit Klebstoff versehen. Der Zahnbogen wird dann in die Zahnkavität mit seinem Basalbereich unter Verdrängung des Klebstoffs eingedrückt und in einer bestimmten Stellung gehalten, in der der Klebstoff aushärten soll.

Nach dem Aushärten erfolgt ein Schruppfräsen, das insbesondere auch Klebstoffreste großzügig entfernt.

Im nächsten Verfahrensschritt erfolgt ein Schlichtfräsen der verklebten Kombination aus Zahnbogen und Prothesenbasis. Nach Fertigstellung werden die Haltestege der Prothesenbasis ebenfalls entfernt und dort wird eine Versäuberung vorgenommen.

Gegebenenfalls ist es auch möglich, bei Bedarf noch einen Polierschritt hinzuzufügen.

Gemäß Fig. 2 ist dargestellt, in welcher Weise auch zwei Zahnbögen 14 in einer Rohlingsscheibe 10 untergebracht werden können.

Im dargestellten Ausführungsbeispiel sind diese gegeneinander versetzt und im Übrigen platzsparend auf der Scheibe untergebracht.

Aus Fig. 3 ist ersichtlich, in welcher Weise ein Zahnbogen 14 in einer anderen Ausführungsform mit Haltestegen 12 versehen sein kann.

Fig. 4 zeigt schematisch einen Schnitt durch den Zahnbogen 14 gemäß der Linie IV-IV. Ein inzisaler oder okklusaler Bereich 16 ist abgerundet ausgebildet, im dargestellten Ausführungsbeispiel kreisrund abgerundet. Wobei hier jegliche Ausgestaltungsformen denkbar sind, wie gewölbte Fläche, die Fissuren andeuten.

Demgegenüber weist der Basalbereich 18 im Wesentlichen eine Trapezform auf. Die Basalfläche 20 ist flach, und von hier ausgehend erstrecken sich seitlich basale Seitenflächen 22 und 24 weg, und zwar voneinander divergierend zum inzisalen Bereich hin. In diesen gehen sie an ihrem Ende stetig über.

Die dargestellte Form ist für den Eckzahn oder Prämolarbereich bestimmt. Im Molarbereich ist demgegenüber der Basalbereich breiter und flacher, und im Frontzahnbereich schmaler und höher.

Dies gilt auch für den entsprechenden inzisalen Bereich des Zahnbogens 14, auch wenn dies in Fig. 3 in dieser Form nicht zum Ausdruck kommt.

Am Übergang zwischen der Basalfläche 20 und den basalen Seitenflächen 22 und 24 ist bevorzugt ein Radius vorgesehen, der recht gering ist, wie beispielsweise 0,8 mm.

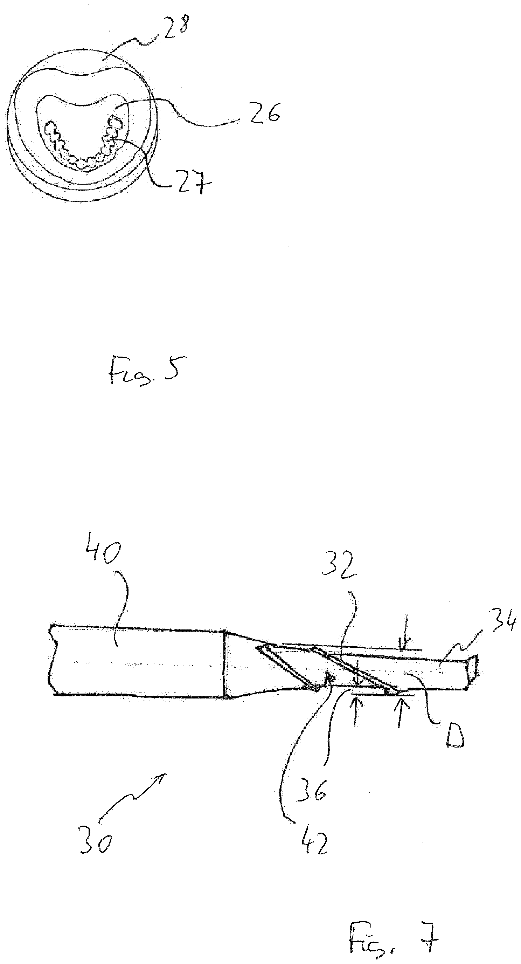

Aus Fig. 5 ist ein Halbfabrikat einer Prothesenbasis in der Draufsicht ersichtlich. Die Prothesenbasis 26 weist in diesem Zustand bereits eine U-förmie Ausnehmung 27 auf, die für die spätere Aufnahme des Basalbereichs 18, also der Basalfläche 20 und der hier angrenzenden Flächen 22 bis 24, des ebenfalls U-förmigen Zahnbogens 14 bestimmt ist.

In diesem Zustand ist die Prothesenbasis noch nicht aus der Rohlingsscheibe 28 herausgetrennt, was jedoch im nächsten Schritt erfolgt.

Die Prothesenbasis 26 wird in ihren überwiegenden Teilen zunächst schruppgefräst und im Bereich der U-förmigen Ausnehmung 27 bereits schlichtgefräst.

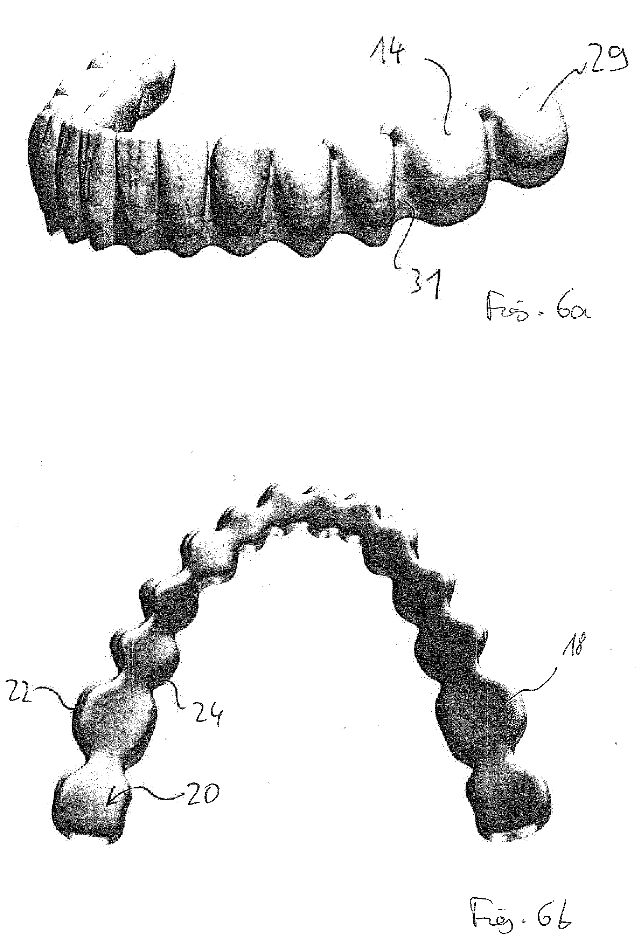

Fig. 6a zeigt einen bereits schruppgefrästen Zahnbogen 14. Der Zahnbogen 14 zeigt bereits einzelne Zähne 29. Die Zähne 29 sind je mit Zahnübergängen 31 miteinander verbunden. Der Zahnbogen 14 ist insofern einstückig und umfasst im dargestellten Ausführungsbeispiel Molare, Prämolare, Eckzähne und Frontzähne.

Es versteht sich, dass anstelle dessen auch ein Zahnteilbogen erfindungsgemäß verwendet werden kann.

Im Basalbereich 18 ist der Zahnbogen 14 in dem dargestellten Zustand ebenfalls erst schruppgefräst, wie es auch Fig. 6 b ersichtlich ist. Dort ist ersichtlich, dass der Basalbereich 18 noch recht ballig und mit einem entsprechenden Aufmaß realisiert ist, während im nächsten Schritt das Aufmaß durch schlichtfräsen entfernt wird.

Schlichtgefräst passt der Basalbereich 18 unter Belassung der Klebefugen exakt in die U-förmige Ausnehmung 27.

Fig. 7 zeigt eine Seitenansicht eines beispielhaften Schruppfräsers 30. Der Schruppfräser 30 ist als Einschneider ausgebildet und diamantbeschichtet. In an sich bekannter Weise weist er einen Rückensteg 32 auf, der gegenüber dem Fräsern 34 um eine Steghöhe 36 vorspringt.

Die Steghöhe 36 ist abhängig von dem Durchmesser des Fräsers. Hierbei sei unter Durchmesser nicht der Durchmesser am Einspannschaft 40, sondern der im vorderen Bereich zu verstehen. Der Durchmesser D kann beim Schruppfräser etwa 1 mm bis 6 mm betragen. Die Steghöhe 36 beträgt ein Zwanzigstel bis ein Sechstel des Durchmessers D.

Der Schruppfräser ist als Einschneider ausgebildet und weist eine spiralig umlaufende Nut 42 auf, die der Abfuhr der Frässpäne dient.

Erfindungsgemäß sind Einschneider bevorzugt, da die Verstopfungsneigung bei diesen am geringsten ist.

Es versteht sich, dass an Stelle dessen beliebige andere Schruppfräser in geeigneter Form verwendet werden können, beispielsweise auch unbeschichtete oder auch Zweischneider oder gegebenenfalls auch Kugelfräser.

Bevorzugt werden aber zumindest für das Fräsen der Zahnbögen beschichtete Schruppfräser verwendet.

Ein erfindungsgemäß zu verwendender Schlichtfräser kann im Wesentlichen den gleichen Aufbau aufweisen, wobei bevorzugt sowohl der Durchmesser D als auch die Steghöhe 36 bei dem Schlichtfräser geringer ist, um der geringeren Zustelltiefe beim Schlichtfrässchritt Rechnung zu tragen.

Das Fräsen erfolgt bevorzugt in einem Master/Slave-Verfahren: Zunächst wird per CAD die optimale Trennfuge zwischen Prothesenbasis und Zahnbogen - unter Einbeziehung des Klebespalts - berechnet.

Als Master wird jedoch die Mindest-Materialstärke des Prothesenbasis verwendet: Wenn diese basierend auf dem Erstentwurf an einer Stelle einen vorgegebenen Mindestwert, beispielsweise 1mm, 1 ,5 mm oder 2 mm, unterschreitet, wird die Trennfuge geändert, so dass der Mindestwert überall eingehalten wird. Dies kann z.B. auch durch Ändern der Steilheit der Basalfläche des Zahnbogens erfolgen, oder ggf. durch Translation in vestibulärer Richtung, insbesondere im Bereich der Schneidezähne mit ihrer ohnehin größeren Basalflächensteilheit.

Dieses Verfahren hat günstige Auswirkungen auf die Festigkeit der Prothesenbasis, bei dennoch optimierter Bereitstellung von Klebeflächen.

## Patentansprüche

1. Verfahren zur Erzeugung einer Prothese oder Teilprothese basierend auf digitalen Daten, unter Verwendung von mehreren in einem Zahnbogen (14) oder Zahnteilbogen vorliegenden Zähnen und einer herzustellenden Prothesenbasis, wobei die Prothesenbasis mittels eines Fräswerkzeugs schruppgefräst, also in einem ersten Schritt gefräst wird, und dass die als Halbfabrikat vorliegende Prothesenbasis teilweise, insbesondere in Bereichen der Prothesenbasis, an welchen die Zähne und die Prothesenbasis aneinander anliegen und/oder miteinander zu verkleben sind, mittels eines anderen Fräswerkzeugs schlichtgefräst, also in einem zweiten Schritt gefräst wird, und damit auf eine Zielhöhe gebracht wird, welche Zielhöhe der Anlage zwischen Prothesenbasis und Zahn oder Zahnbogen zuzüglich des erwünschten Klebespalts zwischen Prothesenbasis und Zahn oder Zahnbogen (14) entspricht **dadurch gekennzeichnet, dass** in Zahnkavitäten der Prothesenbasis ein Zahnbogen (14) eingeklebt wird und hieran anschließend nach Aushärten des Klebstoffs für die Verbindung dieser die Kombination aus Zahnbogen (14) und Prothesenbasis an sämtlichen Stellen, an denen lediglich schruppgefräste Bereiche vorliegen, schlichtgefräst wird.

2. Verfahren nach Anspruch 1, **dadurch gekennzeichnet, dass**, ein Zahnbogen (14) aus einem zahnfarbenen Rohling in einem Schruppfrässchritt schruppgefräst wird und hieran anschließend die Basalfläche (20) der Zähne des Zahnbogens (14) und gegebenenfalls hieran angrenzende gingivale Bereiche des Zahnbogens (14) in einem Schlichtfrässchritt schlichtgefräst werden.

3. Verfahren nach einem der vorhergehenden Ansprüche, **dadurch gekennzeichnet, dass** der Zahnbogen (14) zur Erstellung der Prothese aus Kunststoff besteht, insbesondere mit einer Härte/Festigkeit, die größer als diejenige des Prothesenbasismaterials ist und besonders bevorzugt Füllstoffe, insbesondere PMMA-Perlpolymer-Füller und/oder hochvernetzte Prepolymer-Füller aufweist, die von einer Diffusionsschicht umgeben sind, insbesondere in einem Füllgrad von 20 Gew.%.

4. Verfahren nach einem der vorhergehenden Ansprüche, **dadurch gekennzeichnet, dass** die Prothesenbasis von einer flachzylindrischen Scheibe aus Prothesenbasismaterial ausgehend gefräst wird, und zwar schruppgefräst in einem solchen Ausmaß, dass die Außenkontur im Wesentlichen U-förmig ist.

5. Verfahren nach einem der vorhergehenden Ansprüche, **dadurch gekennzeichnet dass**, die Zustelltiefe des Schruppfräsers beim Fräsen der Prothesenbasis zwischen 0,7mm und 2,5mm beträgt, insbesondere zwischen 1,0mm und 2,0mm, beim Schlichtfräsen der Prothesenbasis zwischen 0,1mm und 0,5mm, und/oder dass die Zustelltiefe des Schruppfräsers beim Fräsen von Zahnbögen oder Zahnteilbögen zwischen 0,6 mmund 2,2 mm beträgt und beim Schlichtfräsen der Zahnbögen oder Zahnteilbögen zwischen 0,1 mm und 0,4 mm, bezogen je auf jeden Frässchritt.

6. Verfahren nach einem der vorhergehenden Ansprüche, **dadurch gekennzeichnet, dass** Schruppfräser zwischen 0,8 mm und 6 mm Durchmesser als Werkzeug eingesetzt werden und zu schlichtfräsende Bereiche zuvor schruppgefräst werden und Schlichtfräser zwischen 0,5 mm und 3 mm, bevorzugt gleich oder weniger als 2,5 mm, eingesetzt werden.

7. Verfahren nach einem der vorhergehenden Ansprüche, **dadurch gekennzeichnet, dass** zwischen Zahnbogen (14) oder Zahnteilbogen und Prothesenbasis eine Klebefuge zwischen 0,08 mm und 0,22 mm besteht und insbesondere die Relativposition der Zahnteilbögen oder des Zahnbogens in den Kavitäten der Prothesenbasis für die Höhen-/ Seiten-/ Winkel-Korrektur der Lage der schruppgefrästen und teilweise schlichtgefrästen beiden Elemente relativ zueinander verwendet wird.

8. Verfahren nach einem der vorhergehenden Ansprüche, **dadurch gekennzeichnet, dass** nach dem Klebstoffauftrag und nach dem Einkleben des Zahnbogens in die Kavitäten der Prothesenbasis und dem Aushärten des Klebstoffs zwischen dem Zahnbogen (14) und der Prothesenbasis der Zahnbogen (14) bei ausschließlicher Einspannung der Prothesenbasis in einem Werkstückhalter der Fräsmaschine schlichtgefräst wird.

9. Verfahren nach einem der vorhergehenden Ansprüche, **dadurch gekennzeichnet, dass** der Zahnbogen (14) unter Belassung von Haltestegen (12) aus einer Rohlingsscheibe (10) schruppgefräst wird, wobei per Schruppfräsen erzeugte Zahnbogen (14) insbesondere inzisal im Querschnitt ballig und gingival mit einer Basalfläche (20) und zu diesen hin konvergierenden Seitenflächen (22, 24) erstellt wird und eine wesentliche U-Form aufweist.

10. Verfahren nach einem der vorhergehenden Ansprüche, **dadurch gekennzeichnet, dass** die Basalgeometrie des Zahnbogens (14) und die zugehörige Form der Kavität der Prothesenbasis aneinander angepasst sind und insbesondere im molaren Bereich flacher und breiter und im Schneidezahnbereich schmaler und tiefer ausgebildet ist.

11. Verfahren nach einem der vorhergehenden Ansprüche, **dadurch gekennzeichnet, dass** die gingivalen Bereiche des Zahnbogens trapezförmig gefräst werden und vorgeformt Kontaktflächen gegenüber den Kavitäten in der Prothesenbasis bilden.

12. Verfahren nach einem der vorhergehenden Ansprüche, **dadurch gekennzeichnet, dass** im wesentlichen U-förmige Zahnbögen in mehreren, insbesondere 3 Größen, vorgefertigt werden und die für die aktuell zu fertigende Prothese am besten passende Größe für diese Prothese ausgewählt wird, wobei insbesondere die im wesentlichen U-förmigen Zahnbögen mittels Fräsen oder Pressverfahrens vorgefertigt worden sind und diese vorzugsweise Halterungen für eine CAM-Maschine aufweisen.

## Claims

1. A method for producing a prosthesis or partial prosthesis based on digital data, using a plurality of teeth present in a dental arch (14) or partial dental arch and a prosthesis base to be produced, wherein the prosthesis base is rough-milled by means of a milling tool, i.e. is milled in a first step, and in that the prosthesis base present as a semi-finished product, is partially, finish-milled by means of another milling tool, i.e. is milled in a second step, in particular in areas of the prosthesis base where the teeth and the prosthesis base are in contact with each other and/or are to be bonded together, and is thus brought to a target height, which target height corresponds to the contact between prosthesis base and tooth or dental arch plus the desired adhesive gap between the prosthesis base and the tooth or dental arch (14), **characterized in that** a dental arch (14) is glued into the tooth cavities of the prosthesis base, and, after the adhesive is hardened for bonding, is followed by finish-milling the combination of dental arch (14) and prosthesis base at all points having rough-milled areas.

2. The method according to claim 1, **characterized in that** a dental arch (14) is rough-milled from a tooth-colored blank in a rough-milling step and subsequently the basal surface (20) of the teeth of the dental arch (14) and, if necessary, gingival regions of the dental arch (14) adjacent thereto are finish-milled in a finish-milling step.

3. The method according to one of the preceding claims, **characterized in that** the dental arch (14) for making the prosthesis is made of plastic, in particular with a hardness/strength which is greater than that of the prosthesis base material and particularly preferably includes fillers, in particular PMMA bead polymer fillers and/or highly crosslinked prepolymer fillers, which are surrounded by a diffusion layer, in particular in a filling degree of 20% by weight.

4. The method according to one of the preceding claims, **characterized in that** the prosthesis base is milled starting from a flat cylindrical disc of prosthesis base material, and is rough-milled such that the outer contour is substantially U-shaped.

5. The method according to one of the preceding claims, **characterized in that** the infeed depth of the roughing cutter, when milling the prosthesis base, is between 0.7 mm and 2.5 mm, in particular between 1.0 mm and 2.0 mm, between 0.1 mm and 0.5 mm when finish-milling the prosthesis base, and/or that the infeed depth of the roughing cutter when milling dental arches or partial dental arches is between 0.6 mm and 2.2 mm, and when finish-milling the dental arches or partial dental arches is between 0.1 mm and 0.4 mm, in relation to each milling step.

6. The method according to one of the preceding claims, **characterized in that** roughing cutters having a diameter of between 0.8 mm and 6 mm are used as a tool, and areas to be finish-milled are previously rough-milled, and finishing cutters will be used between 0.5 mm and 3 mm, preferably equal to or less than 2.5 mm.

7. The method according to one of the preceding claims, **characterized in that** an adhesive joint of between 0.08 mm and 0.22 mm is present between the tooth arch (14) or the partial tooth arch and the prosthesis base, and especially the relative position of the partial tooth arches or the tooth arch in the cavities of the prosthesis base is used for height/side/angle correction of the position of the two rough-milled and partially finish-milled elements in relation to each other.

8. The method according to one of the preceding claims, **characterized in that**, following application of the adhesive and gluing the dental arch into the cavities of the prosthesis base and hardening the adhesive between the dental arch (14) and the prosthesis base, the dental arch (14) is finish-milled with the prosthesis base being exclusively clamped into a workpiece holder of the milling machine.

9. The method according to one of the preceding claims, **characterized in that** the dental arch (14) is rough-milled from a blank disc (10) leaving retaining webs (12), wherein dental arches produced by rough-milling are produced, in particular inciscially, crowned and gingival in cross-section having a basal surface (20) and side surfaces (22, 24) converging thereto and having a substantial U-shape.

10. The method according to one of the preceding claims, **characterized in that** the basal geometry of the dental arch (14) and the associated shape of the cavity of the prosthesis base are adapted to each other, and especially are flatter and wider in the molar region, and are narrower and deeper in the incisor region.

11. The method according to one of the preceding claims, **characterized in that** the gingival regions of the dental arch are trapezoidally milled and preformed to form contact surfaces opposite the cavities in the prosthesis base.

12. The method according to one of the preceding claims, **characterized in that** substantially U-shaped dental arches are prefabricated in several sizes, in particular three sizes, and the size best suited for the prosthesis currently to be produced is selected for this prosthesis, wherein especially the substantially U-shaped dental arches have been prefabricated by means of milling or pressing, and preferably comprising holders for a CAM machine.

## Revendications

1. Procédé de création d'une prothèse ou d'une prothèse partielle sur la base de données numériques, en utilisant plusieurs dents présentes dans une arcade dentaire (14) ou une arcade dentaire partielle et une base de prothèse à fabriquer, où la base de prothèse est fraisée grossièrement au moyen d'un outil de fraisage, c'est-à-dire fraisée dans une première étape, et la base de prothèse présente sous forme d'un produit semi-fini est finie par endroits au moyen d'un autre outil de fraisage, c'est-à-dire fraisée dans une deuxième étape, en particulier dans des zones de la base de prothèse sur lesquelles les dents et la base de prothèse s'appuient les unes contre les autres et/ou doivent être collées les unes aux autres, et atteint ainsi une hauteur de cellule qui correspond au point de contact entre la base de la prothèse et la dent ou l'arcade dentaire plus la fente de collage souhaité entre la base de la prothèse et la dent ou l'arcade dentaire (14), **caractérisé en ce que en ce qu'**une arcade dentaire (14) est collée dans des cavités dentaires de la base de la prothèse et qu'après le durcissement de la colle pour l'union de celles-ci, un fraisage de finition est ensuite effectué sur toutes les parties de la combinaison de l'arcade dentaire (14) et de la base de la prothèse où il n'y a que des zones dégrossies grossières.

2. Procédé selon la revendication 1, **caractérisé en ce qu'**une arcade dentaire (14) est fraisée grossièrement à partir d'un lingotin de couleur étain dans une étape de dégrossissage et ensuite la surface basale (20) des dents de l'arcade dentaire (14) et, si nécessaire, les zones gingivales de l'arcade dentaire (14) contiguës à celle-ci sont finies dans une étape de fraisage de finition.

3. Procédé selon l'une des revendications précédentes, **caractérisé en ce que** l'arcade dentaire (14) pour la fabrication de la prothèse est en matière plastique, en particulier avec une dureté/résistance qui est supérieure à celle du matériau de base de la prothèse et, de manière particulièrement préférée, présente des matières de remplissage, en particulier des charges de polymère perlé PMMA et/ou des charges de prépolymère hautement réticulé, qui sont entourées d'une couche de diffusion, en particulier à hauteur de 20 % en poids.

4. Procédé selon l'une des revendications précédentes, **caractérisé en ce que** la base de la prothèse dentaire est fraisée par un disque cylindrique plat en matériau de base de la prothèse dentaire, fraisée grossièrement de telle manière que le contour extérieur est sensiblement en forme de U.

5. Procédé selon l'une des revendications précédentes, **caractérisé en ce que** la profondeur de coupe de la fraise grossière lors du fraisage de la base de la prothèse est comprise entre 0,7 mm et 2,5 mm, en particulier entre 1,0 mm et 2,0 mm, lors du fraisage de finition de la base de la prothèse est comprise entre 0, 1 mm et 0,5 mm, et/ou que la profondeur de passe de la fraise grossière soit comprise entre 0,6 mm et 2,2 mm lors du fraisage d'arcs de dents ou d'arcs de dents partiels et entre 0,1 mm et 0,4 mm, lors du fraisage de finition des arcades dentaires ou des arcades dentaires partielles, par rapport à chaque étape de fraisage.

6. Procédé selon l'une des revendications précédentes, **caractérisé en ce que** des fraises d'un diamètre compris entre 0,8 mm et 6 mm sont utilisées comme outil pour le fraisage grossier et que les zones à finir sont préalablement dégrossies et des fraises de finition d'un diamètre compris entre 0,5 mm et 3 mm, de préférence égal ou inférieur à 2,5 mm, sont utilisées.

7. Procédé selon l'une des revendications précédentes, **caractérisé en ce qu'**un joint adhésif compris entre 0,08 mm et 0,22 mm est présent entre l'arcade dentaire (14) ou l'arcade dentaire partielle et la base de la prothèse dentaire et en particulier la position relative des arcades dentaires partielles ou de l'arcade dentaire dans les cavités de la base de la prothèse dentaire est utilisée pour la correction de l'élévation, d'angle et latérale de la position des éléments de fraisage, et grossier et de finition partielle, l'un par rapport à l'autre.

8. Procédé selon l'une des revendications précédentes, **caractérisé en ce qu'**après l'application de la colle et après l'encollage de l'arcade dentaire dans les cavités de la base de la prothèse et le durcissement de la colle entre l'arcade dentaire (14) et la base de la prothèse, l'arcade dentaire (14) est finie avec le serrage exclusif de la base de la prothèse dans un porte-pièce de la fraiseuse.

9. Procédé selon l'une des revendications précédentes, **caractérisé en ce que** l'arcade dentaire (14) est fraisée grossièrement à partir d'un lingotin sous forme de disque (10) en laissant des nervures de retenue (12), où l'arcade dentaire (14) produite par fraisage grossier est créée en particulier incisive, couronnée en section transversale, et gingivale, avec une surface de base (20), et des surfaces latérales (22, 24) convergeant vers celles-ci et présente une forme sensiblement en U.

10. Procédé selon l'une des revendications précédentes, **caractérisé en ce que** la géométrie basale de l'arcade dentaire (14) et la forme associée de la cavité de la base de la prothèse sont adaptées l'une à l'autre et en particulier sont plus plates et plus larges dans la région des molaires et plus étroites et plus profondes dans la région des incisives.

11. Procédé selon l'une des revendications précédentes, **caractérisé en ce que** les zones gingivales de l'arcade dentaire sont fraisées en forme de trapèze et préformées pour former des surfaces de contact opposées aux cavités de la base de la prothèse.

12. Procédé selon l'une des revendications précédentes, **caractérisé en ce que** des arcades dentaires sensiblement en forme de U sont préfabriquées en plusieurs tailles, en particulier 3 tailles, et la taille la mieux adaptée à la prothèse à produire actuellement est choisie pour cette prothèse, où en particulier les arcades dentaires sensiblement en forme de U ont été préfabriqués au moyen de fraisage ou de pressage et celles-ci présentent de préférence des supports de montage pour une machine CAM.
